**Europäisches Patentamt**

**European Patent Office**

**Office européen des brevets**

(11) Veröffentlichungsnummer: **0 098 244**
**B1**

(12) ## EUROPÄISCHE PATENTSCHRIFT

(45) Veröffentlichungstag der Patentschrift:
27.11.85

(51) Int. Cl.⁴: **B 23 K 26/04**

(21) Anmeldenummer: 83810272.1

(22) Anmeldetag: 20.06.83

(54) **Verfahren und Vorrichtung zum Fokussieren eines Lichtstrahls auf ein Objekt.**

(30) Priorität: 25.06.82 CH 3923/82

(43) Veröffentlichungstag der Anmeldung:
11.01.84 Patentblatt 84/2

(45) Bekanntmachung des Hinweises auf die Patenterteilung:
27.11.85 Patentblatt 85/48

(84) Benannte Vertragsstaaten:
CH DE FR GB IT LI

(56) Entgegenhaltungen:
CH - A - 477 676
FR - A - 2 295 476
FR - E - 94 871
US - A - 3 689 159
US - A - 3 902 036

(73) Patentinhaber: GRETAG Aktiengesellschaft,
Althardstrasse 70, CH-8105 Regensdorf (CH)

(72) Erfinder: Kunz, Rino Ernst, Dr., im Schibler 18,
CH-8162 Steinmaur (CH)

(74) Vertreter: Pirner, Wilhelm et ai, Patentabteilung der
CIBA-GEIGY AG Postfach, CH-4002 Basel (CH)

## Beschreibung

Die Erfindung betrifft ein Verfahren und eine Vorrichtung zum Fokussieren eines Lichtstrahls, insbesondere eines Laserstrahls, auf ein von diesem beaufschlagtes Objekt gemäss Oberbegriff des Patentanspruchs 1 bzw. 7.

Die Bearbeitung von Werkstücken mittels Laserstrahlen gewinnt immer mehr an Bedeutung. Eines der wesentlichsten Probleme in diesem Zusammenhang besteht darin, den Laserstrahl einerseits optimal auf die zu bearbeitende Oberfläche zu fokussieren und anderseits diese optimale Fokuseinstellung auch stets beizubehalten bzw. entsprechend nachzuregeln.

Für die Fokuseinstellung bzw. automatische Fokusregelung sind verschiedene Methoden bekannt. Eine davon ist z. B. in der DE-PS Nr. 2034341 bzw. der US-PS Nr. 3689159 beschrieben. Bei dieser Methode wird der vom Bearbeitungslaserstrahl oder einem Hilfslaser auf dem Objekt erzeugte Leuchtfleck auf eine in Richtung der optischen Achse oszilierende Messblende abgebildet, wobei die Neutrallage der Messblende mit der Bildebene des Leuchtflecks bei idealer Fokussierung zusammenfällt, und dann das von der Blende durchgelassene Licht einem Fotoempfänger zugeführt. Bei optimaler Fokussierung liegt das Bild des Leuchtflecks genau in der Mitte des Schwingungswegs der Messblende und der zeitliche Verlauf des vom Fotoempfänger erzeugten Messsignals ergibt eine symmetrische, im wesentlichen sinusförmige Kurve. Bei Abweichungen vom optimalen Fokussierungszustand liegt das Leutfleck-Bild ausserhalb der Mitte des Schwingungswegs der Messblende und das Messsignal wird entsprechend unsymmetrisch. Diese Unsymmetrie wird dann mittels eines phasenempfindlichen Detektors zur Einstellung bzw. Nachführung der Fokussierung ausgewertet.

Ein anderes z. B. in der DE-PS Nr. 2453364 beschriebenes System verwendet anstatt einer schwingenden Messblende eine oszilierende Fokussierlinse.

Diese bekannten Systeme arbeiten im Prinzip recht gut, sind jedoch mit verschiedenen Mängeln behaftet. So erfordern sie z. B. eine mechanisch schwingende Messblende bzw. ein oszilierendes Objektiv mit allen inhärenten Nachteilen mechanisch bewegter Teile und sind auch bezüglich Elektronik relativ aufwendig. Ausserdem sind sie vor allem für kontinuierliche Laser bestimmt, während sir für Puls-Laser weniger geeignet sind. Schliesslich weisen sie in der Nähe des optimalen Fokuspunktes keine speziell grosse Empfindlichkeit auf.

In der FR-Zusatz-PS Nr. 94871 ist ein Laser-Abtastsystem für Oberflächen-Reliefs beschrieben, welches im wesentlichen ohne bewegte Teile auskommt. Anstelle der einen, bewegten, Messblende sind zwei feststehende Messblenden vorgesehen, auf die der Leuchtfleck gleichzeitig abgebildet wird. Die beiden Messblenden befinden sich vor bzw. hinter der jeweiligen Bildebene des Leuchtflecks bei idealer Fokussierung. Das von den Messblenden durchgelassene Licht beaufschlagt zwei Fotoempfänger, deren jeweilige Ausgangssignale dann ein Mass für den Fokussierungszustand bzw. die Tiefenausdehnung der abgetasteten Reliefs sind.

Bei diesem bekannten System ist das vom Leuchtfleck ausgehende und schliesslich die beiden Fotoempfänger beaufschlagende Licht mittels zweier Strahlenteiler/Spiegel oder mittels einer Maske räumlich völlig inhomogen in zwei separate Messstrahlengänge aufgeteilt. Mechanische und thermische sowie durch elektrische/magnetische Felder und Brechzahlschwankungen bedingte Effekte können sich dabei verschieden stark auf die beiden Messstrahlengänge auswirken und dadurch zu erheblichen Messfehlern führen. Die Elimination oder Kompensation der schädlichen Einflüsse ist andererseits sehr schwierig, mühsam und aufwendig.

Die US-PS Nr. 3614456 schliesslich zeigt ein weiteres Fokussiersystem, welches ähnlich wie das System nach der FR-Zusatz-PS Nr. 94871, jedoch mit nur einer einzigen Messblende arbeitet. Dieses System reagiert sehr empfindlich auf Störeinflüsse, ist schwierig zu justieren und daher für den praktischen Einsatz in Systemen mit höheren Präzisionsanforderungen nicht geeignet.

Durch die vorliegende Erfindung sollen nun ein Verfahren und eine Vorrichtung der zur Rede stehenden, in den Oberbegriffen der Ansprüche 1 und 7 definierten Art dahingehend verbessert werden, dass unter Verwendung von möglichst wenigen optischen Komponenten eine räumlich möglichst homogene Aufteilung des Messstrahlengangs erreicht wird, sodass also jeder Teilmessstrahl gewissermassen dasselbe Schicksal erleidet (selbe Bedingungen bezüglich Ablenkwinkel, Polarisation, Temperatur der Fotoempfänger etc.). Dabei soll auch Puls-Betrieb möglich sein und eventuell noch eine möglichst hohe Empfindlichkeit im Bereich optimaler Fokussierung erreicht werden.

Das diese der Erfindung zugrundeliegende Aufgabe lösende erfindungsgemässe Verfahren und die entsprechende erfindungsgemässe Vorrichtung sind im Patentanspruch 1 bzw. 7 beschrieben. Bevorzugte Ausführungsvarianten und Weiterbildungen ergeben sich aus den abhängigen Ansprüchen.

Im folgenden wird die Erfindung anhand der Zeichnung näher erläutert. Es zeigen:

Fig. 1 eine schematische Darstellung eines ersten Ausführungsbeispiels der erfindungsgemässen Vorrichtung,

Fig. 2 den für die Erfindung wesentlichen Ausschnitt aus der Vorrichtung nach Fig. 1 in anderer Darstellung,

Fig. 3a-3d Skizzen und Diagramme zur Erläuterung der Wirkungsweise der Messblenden,

Fig. 4a-4c drei Beispiele für weitere mögliche Messblendenformen,

Fig. 5a und 5b eine alternative Realisierung einer Messblende,

Fig. 6 ein zweites Ausführungsbeispiel einer erfindungsgemässen Vorrichtung,

Fig. 7 eine Detailvariante, und

Fig. 8 ein Prinzipschema zur Herstellung eines holographischen Elements für das Ausführungsbeispiel nach Fig. 6.

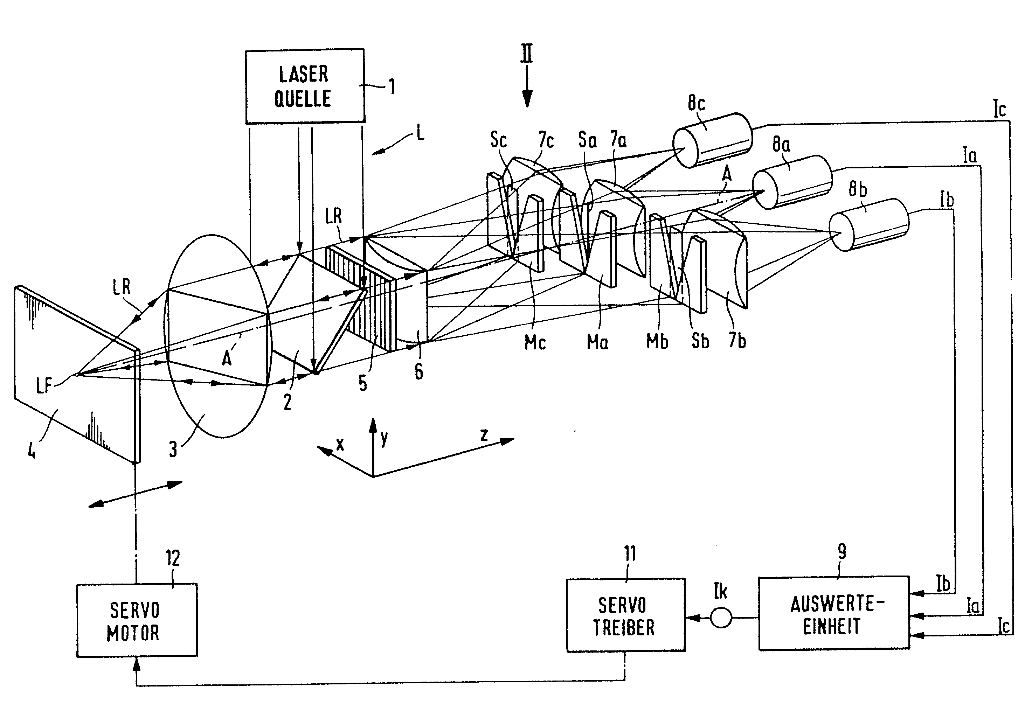

Die in Fig. 1 schematisch dargestellte Laserbearbeitungsvorrichtung stimmt in ihrem grundsätzlichen Aufbau mit dem bekannten Stand der Technik, wie erbeispielsweise durch die eingangs erwähnte US-PS Nr. 3689159 gegeben ist, überein, sodass sich die folgende Beschreibung lediglich auf die für die Erfindung wesentlichen Teile konzentrieren kann.

Die gezeigte Vorrichtung umfasst eine Laserquelle 1, welche einen Laserstrahl L über einen halbdurchlässigen Spiegel 2 und eine Fokussierlinse 3 auf ein zu bearbeitendes Werkstück oder Objekt 4 wirft und dort einen je nach Fokussierungszustand mehr oder weniger grossen Leuchtfleck LF erzeugt. Das von diesem Leuchtfleck zurückgeworfene Laserlicht LR gelangt über die Fokussierlinse 3 und den halbdurchlässigen Spiegel 2 auf eine aus einem Beugungsgitter (Strichgitter) 5 und einer Zylinderlinse 6 bestehende Optik, welche den Strahlengang in drei Teile aufspaltet und den Leuchtfleck LF gleichzeitig auf drei seitlich und in Richtung der optischen Achse A (Z-Achse) gegenseitig versetzte Messblenden Ma, Mb und Mc in Form von drei hier vertikalen Linien oder Streifen Sa, Sb und Sc abbildet. Das durch die Messblenden hindurchtretende bzw. von diesen nicht ausgeblendete Licht wird dann mittels dreier weiterer Zylinderlinsen 7a, 7b und 7c auf drei Fotoempfänger 8a, 8b und 8c gerichtet und von diesen gemessen. Die den Intensitäten Ia, Ib und Ic des jeweils gemessenen Lichts entsprechenden elektrischen Signale sind von der Fokuseinstellung abhängig und werden einer Auswertestufe 9 zugeführt, welche daraus ein für den jeweiligen Fokussierungszustand charakteristisches Korrektursignal Ik erzeugt. Dieses Signal wird dann von einer aus einem Servo-Treiber 11 und einem Servo-Antrieb 12 bestehenden Regeleinrichtung dazu verwendet, das Werkstück 4 in Richtung der z-Achse relativ zur Fokussierlinse 3 so lange zu verstellen, bis die optimale Fokuseinstellung erreicht ist. Selbstverständlich kann auch die Fokussierlinse relativ zum Werkstück verstellt werden.

Fig. 2 zeigt die für die Erfindung relevanten Teile der Vorrichtung nach Fig. 1 in Draufsicht, wobei die Zylinderlinsen 7a-7c der Einfachheit halber weggelassen sind. Wie man erkennt, sind die drei Messblenden Ma-Mc, abgesehen von ihrer seitlichen Versetzung, in z-Richtung, d. h. Richtung der optischen Achse des Systems gegenseitig versetzt. Die Messblende Ma befindet sich genau in der Bild- oder Brennebene FP des Systems, in welcher das Bild des Leuchtflecks LF entsteht, wenn der Laserstrahl L exakt bzw. optimal auf das Objekt 4 fokussiert ist; die Position dieser Bildebene FP wird im folgenden als Sollposition bezeichnet. Die Messblende Mb befindet sich etwas hinter der Messblende Ma bzw. der Sollposition FP, die Messblende Mc symmetrisch dazu davor.

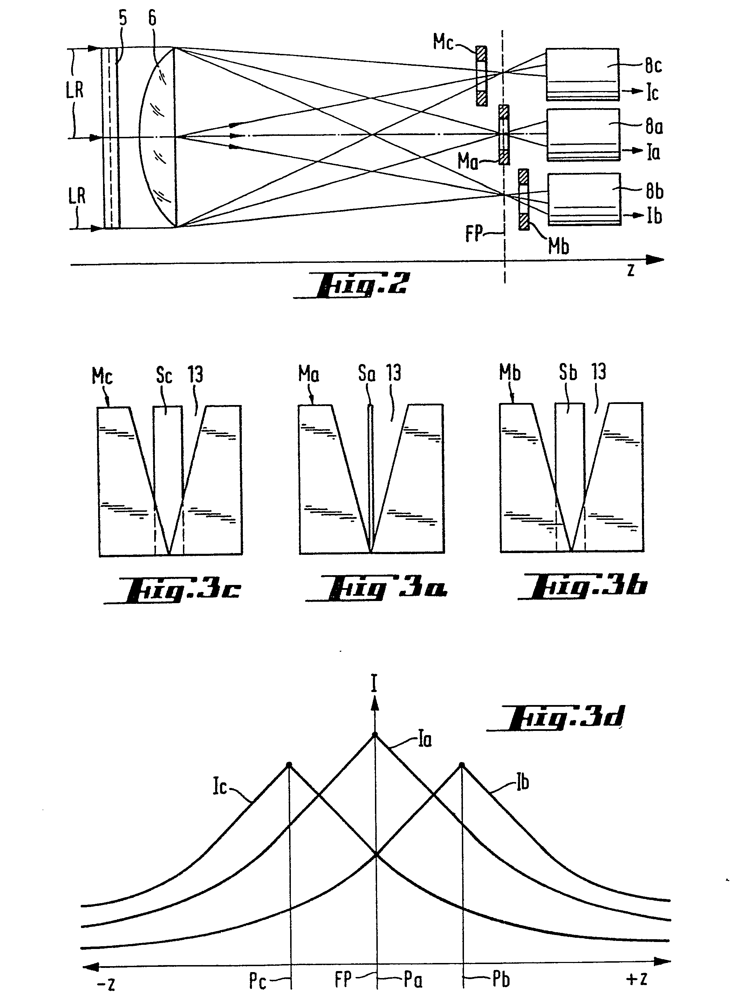

Die Wirkungsweise der drei Messblenden Ma-Mc geht aus den Fig. 3a-3d hervor. Jede Messblende ist mit einer V-förmigen Blendenöffnung 13 versehen, die symmetrisch zum zugeordneten Bild Sa, Sb, Sc des Leuchtflecks LF angeordnet ist. Die Darstellung der Fig. 3a-3c entspricht den Verhältnissen optimaler Fokuseinstellung. Das Bild Sa des Leuchtflecks LF entsteht genau am Ort der Blende Ma und ist praktisch ideal linienförmig, sodass es von der Messblende praktisch nicht abgeschattet wird. Das entsprechende Messignal Ia des Fotoempfängers 8a ist daher maximal. Die beiden anderen Messblenden 8b und 8c befinden sich ausserhalb der exakten Bildebene, sodass also die Bilder Sb und Sc des Leuchtflecks LF auf ihnen als relativ breite Streifen erscheinen. Aufgrund der Form der Blendenöffnungen 13 wird daher mit zunehmender Streifenbreite ein immer grösserer Teil des Lichts abeschattet und das Messignal Ib bzw. Ic der zugeordneten Fotoempfänger wird entsprechend kleiner.

Analog ist die Situation, wenn der Laserstrahl L nicht genau auf das Werkstück 4 fokussiert ist. In diesem Fall entstehen die drei Bilder Sa-Sc des Leuchtflecks LF nicht genau in der Sollposition FP, sondern davor oder dahinter. Entsprechend werden die Messignale Ia-Ic der drei Fotoempfänger 8a-8c irgendeinen Zwischenwert zwischen ihren möglichen Extremwerten annehmen. In Fig. 3d sind die Verläufe der drei Messsignale Ia-Ic in Abhängigkeit von der Verschiebung der tatsächlichen Bildebene der drei Leuchtfleckbilder gegenüber der Sollposition FP und damit gleichzeitig in Abhängigkeit vom Fokussierungszustand dargestellt. Die Abszissenpunkte Pc, Pa und Pb markieren die Positionen der drei Messblenden Mc, Ma und Mb.

Aus Obigem folgt, dass aus der Grösse der drei Messsignale Ia-Ic auf den jeweiligen Fokussierungszustand geschlossen werden kann. Ist Ic grösser als Ib, befindet sich das Objekt 4 zu weit von der Fokussierlinse 3 weg. Ist umgekehrt Ib grösser als Ic, so ist es zu nahe bei der Linse 3. Der Punkt optimaler Fokussierung ist erreicht, wenn die beiden Messignale Mb und Mc gleich gross bzw. das Messignal Ma maximal ist. Weiter ist klar, dass zur Bestimmung der Abweichung vom optimalen Fokuspunkt nach Richtung und Betrag im Prinzip zwei Messblenden allein bereits genügen. Durch Verwendung der dritten Messblende in der Sollposition lässt sich jedoch eine Verbesserung des Kennlinienverlaufs sowie eine Kompensation gewisser Störgrössen wie Änderung der Strahlungsleistung oder der Oberflächeneigenschaften des Objekts 4 erreichen.

Das für den Fokussierzustand charakteristische Korrektursignal Ik kann in der Auswertestufe 9 bei Verwendung von zwei Messblenden Mb und Mc etwa nach der Formel Ik = Ib−Ic und bei Verwendung von allen drei Messblenden Ma-Mc etwa nach der Formel Ik = (Ib−Ic)/Ia berechnet werden.

Wie Fig. 3d zeigt, verläuft der Zusammenhang zwischen Messsignal und Fokussierzustand bei Verwendung von V-Messblenden gemäss Fig. 3a-3c in der Nähe des Punkts optimaler Fokussierung im wesentlichen linear. Das Korrektursignal Ik ver-

hält sich ebenso, wobei seine Steilheit und damit die Empfindlichkeit des Systems in der Nähe des Fokuspunkts durch geeignete Formgebung der Messblenden den praktischen Bedürfnissen angepasst werden kann. Selbstverständlich lassen sich durch entsprechende Formgebung der Messblenden und Wahl der optischen Abbildung (z. B. sphärische Linsen) auch nichtlineare Kennlinien realisieren.

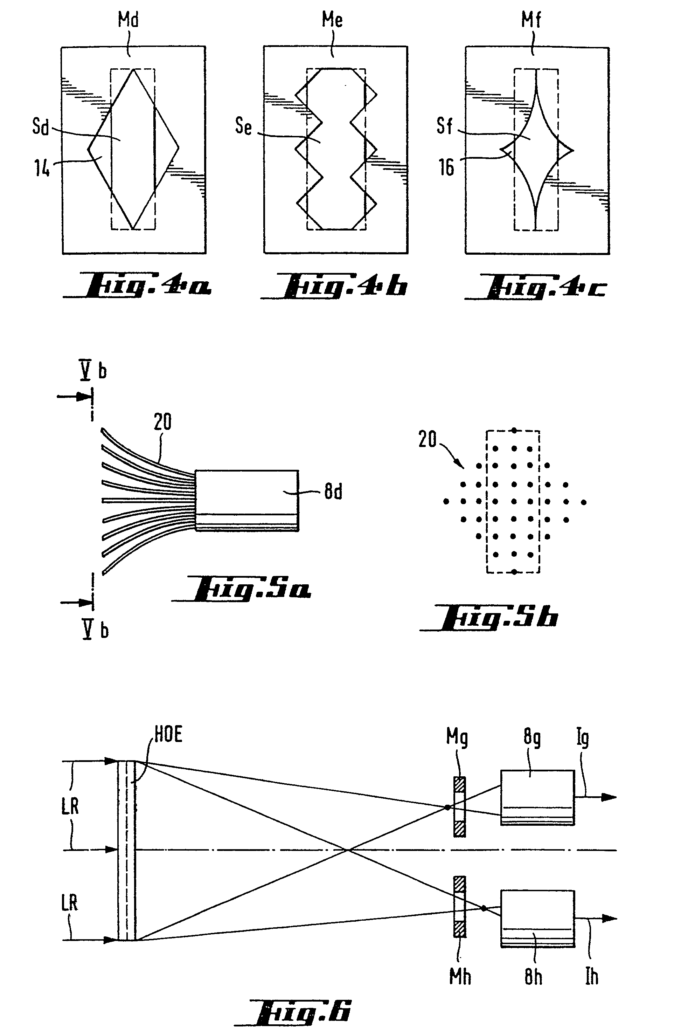

In den Fig. 4a-4c sind drei weitere Ausbildungsmöglichkeiten für die Messblenden dargestellt. Die Messblende Md gemäss Fig. 4a besitzt eine rautenförmige Blendenöffnung 14 und liefert eine doppelt so steile Kennlinie wie die V-Messblenden gemäss das vorangegangenen Erläuterungen. Ähnliches gilt für die Messblende Me in Fig. 4b mit dem Unterschied, dass sie bis zu einer gewissen Mindestabweichung von der optimalen Fokussierung eine regelfreie Totzone aufweist. Die Messblende Mf nach Fig. 4c schliesslich weist eine von konvexen Kanten begrenzte Blendenöffnung 16 auf und liefert eine gekrümmte, in der Nähe des optimalen Fokuspunkt besonders steile Kennlinie.

Vorstehend wurde lediglich von transmittierenden Messblenden gesprochen. Es versteht sich, dass selbstverständlich auch reflektierende Messblenden für die Erfindung geeignet sind. Ferner können die Messblenden natürlich auch durch ein entsprechend geformtes Eintrittsfenster der Fotoempfänger oder durch eine entsprechende Ausbildung bzw. Anordnung von Fotoempfängern selbst oder mittels irgendwelcher Lichtleiteranordnungen oder dgl. realisiert sein. Letzteres ist beispielsweise in den Fig. 5a und 5b dargestellt, wo ein Lichtleiterbündel 20 so ausgebildet ist, dass die Lichteintrittsflächen sämtlicher Einzelleiter in einer Ebene liegen und z. B. die in Fig. 5b gezeigte Konfiguration aufweisen. Die anderen Enden der Lichtleiter führen zum Fotoempfänger 8d. Diese Lichtleiteranordnung ist in etwa der Messblende gemäss Fig. 4a äquivalent.

Ferner versteht es sich, dass die Aufspaltung des reflektierten Laserlichts LR in drei Strahlengänge nicht unbedingt mittels eines Beugungsgitters erfolgen muss. Selbstverständlich sind dazu auch andere Mittel wie Strahlenteiler oder Prismen oder dgl. einsetzbar. Ausserdem muss der Leuchtfleck LF auch nicht unbedingt in Form eines Strichs oder Streifens abgebildet werden, sondern es ist natürlich auch jede beliebige andere geometrische Form möglich. Die Abbildung als Linie hat sich jedoch als besonders zweckmässig hinsichtlich des Regelverhaltens des gesamten Systems erwiesen.

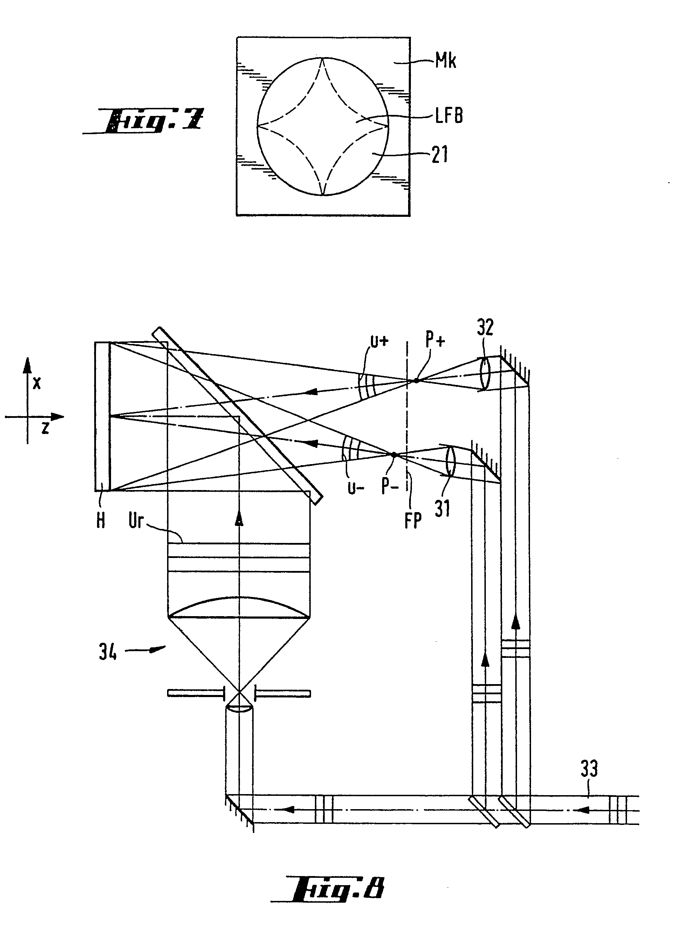

Eine ganz besonders vorteilhafte und elegante Art der Abbildung des Leuchtflecks LF besteht in der Verwendung eines Hologramms bzw. Holographisch Optischen Elements. Da ein Hologramm mehrere optische Funktionen gleichzeitig übernehmen kann, ist damit ein besonders kompakter Aufbau der Vorrichtung möglich. In Fig. 6 ist dies an einem mit nur zwei Fotoempfängern ausgestatteten Ausführungsbeispiel der erfindungsgemässen Vorrichtung dargestellt.

Das vom Leuchtfleck reflektierte Licht LR gelangt über die hier nicht gezeichnete Fokussierlinse 3 und den Spiegel 2 auf ein Holographisch Optisches Element HOE. Dieses moduliert das Licht und erzeugt dabei zwei linien- bzw. streifenförmige Abbildungen des Leuchtflecks. Diese Abbildungen könnten in einer Ebene liegen, wobei dann wie bei Fig. 1 und 2 mit axial versetzten Messblenden gearbeitet werden müsste. Im Beispiel nach Fig. 6 liegen die beiden Abbildungen jedoch gegenseitig versetzt, und die beiden Messblenden Mg und Mh liegen in einer Ebene zwischen den beiden Abbildungsebenen des Leuchtflecks. Das von den beiden Messblenden durchgelassene Licht beaufschlagt die beiden Fotoempfänger 8g und 8h, deren Messignale Ig und Ih dann ensprechend den vorstehenden Erläuterungen weiter verarbeitet werden.

Mit Hilfe des Holographisch Optischen Elements bzw. Hologramms HOE kann die geometrische Form der Bilder des Leuchtflecks ferner so beeinflusst bzw. gewählt werden, dass die Messblenden sehr einfach gestaltet oder überhaupt weggelassen werden können. In Fig. 7 ist dies beispielsweise dargestellt, wobei das Leuchtfleckbild LFB eine etwa sternförmige Gestalt hat und die Blendenöffnung 21 der Messblende Mk kreisrund ist.

Die Herstellung des Hologramms kann nach den üblichen Methoden erfolgen und wird im folgenden rein beispielsweise für ein zwei in Achsenrichtung (und quer dazu) versetzte Bildpunkte erzeugendes Hologramm anhand der Fig. 8 beschrieben.

Zur Erzeugung eines Hologramms mit zwei im Raum angeordneten Bildpunkten $P_+$ und $P_-$ braucht lediglich das Interferenzmuster von diesen beiden Punkten $P_+$ und $P_-$ ausgehender Kugelwellen $u_+$ bzw. $u_-$ mit einer ebenen Referenzwelle Ur auf einer mit einem fotoempfindlichen Aufzeichnungsmaterial beschichteten Platte H aufgezeichnet zu werden. Die beiden Kugelwellen $u_+$ und $u_-$ werden mittels zweier Linsen 31 und 32 mit den Punkten $P_+$ und $P_-$ als Brennpunkte aus einem Laserstrahl 33 erzeugt. Analog wird auch die ebene Referenzwelle Ur mittels eines Strahlaufweiters 34 aus dem Laserstrahl 33 abgeleitet.

Die fotografish entwickelte und fixierte Hologrammplatte H kann nun als Holographisch Optisches Element HOE in der Vorrichtung gemäss Fig. 6 eingesetzt werden und liefert dann bei Beleuchtung von der Gegenseite her (in Fig. 8 von links) die beiden gewünschten Abbildungen des Leuchtflecks.

## Patentansprüche

1. Verfahren zum Fokussieren eines Lichtstrahls, insbesondere eines Laserstrahls, auf ein Objekt, wobei vom Leuchtfleck (LF) auf dem Objekt (4) mittels eines optischen System wenigstens zwei Bilder (Sa, Sb, Sc) erzeugt werden, jedem solchen Bild eine Messblende (Ma, Mb, Mc) in unterschiedlicher Position relativ zur jeweiligen Sollposition (FP) des Bildes des Leuchtflecks bei optimaler Fokussierung zugeordnet wird, und die Intensitäten des von den Messblenden nicht ausgeblendeten Lichts gemessen und als Mass für die Fokussierung ausgewertet werden sowie die Fokussierung danach eingestellt wird, dadurch gekennzeichnet, dass die wenigstens zwei Bilder (Sa, Sb, Sc) des Leuchtflecks (LF) mittels eines Beugungsgitters (5) oder eines äquivalenten, Holographischen Optischen Elements (HOE) erzeugt werden.

2. Verfahren nach Anspruch 1, dadurch gekennzeichnet, dass der Leuchtfleck (LF) durch eine Zylinderlinse (6) oder äquivalente Mittel (HOE) in Form eines je nach Fokussierungszustand mehr oder weniger breiten Lichtstreifens (Sa, Sb, Sc) auf die Messblenden (Ma, Mb, Mc) abgebildet wird.

3. Verfahren nach Anspruch 2, dadurch gekennzeichnet, dass Messblenden (Ma, Mb, Mc) mit einer im wesentlichen V-förmigen Blendenöffnung (13) verwendet werden, deren Weite zumindest nach einer Seite in Längsrichtung der Lichtstreifen (Sa, Sb, Sc) abnimmt.

4. Verfahren nach Anspruch 3, dadurch gekennzeichnet, dass Messblenden (Md) mit einer im wesentlichen rautenförmigen Blendenöffnung (14) verwendet werden, deren eine Diagonale im wesentlichen in der Mittelachse des Lichtstreifens (Sd) liegt.

5. Verfahren nach Anspruch 3, dadurch gekennzeichnet, dass Messblenden (Mf) mit einer durch nichtlineare Kanten begrenzten Blendenöffnung (16) verwendet werden.

6. Verfahren nach Ansrpuch 1, dadurch gekennzeichnet, dass drei Bilder (Sa, Sb, Sc) des Leuchtflecks (LF) erzeugt werden, wobei eine der Messblenden (Mc) vor, eine der Messblenden (Ma) im wesentlichen in und eine der Messblenden (Mb) nach der Sollposition (FP) des Bildes (Sa) des Leuchtflecks (LF) bei optimaler Fokussierung angeordnet ist.

7. Vorrichtung zum Fokussieren eines Lichtstrahls, insbesondere eines Laserstrahls, auf ein von ihm beaufschlagtes Objekt, mit einem optischen System (5, 6; HOE), welches vom Leuchtfleck (LF) auf dem Objekt (4) wenigstens zwei Bilder (Sa, Sb, Sc) erzeugt, mit zwei je einem Bild zugeordneten Messblenden (Ma, Mb, Mc), welche in unterschiedlichen Positionen relativ zu den jeweiligen Sollpositionen (FP) der Bilder (Sa, Sb, Sc) des Leuchtflecks (LF) bei optimaler Fokussierung angeordnet sind, und mit opto-elektrischen Mitteln (8a, 8b, 8c, 9), welche das von den Messblenden nicht ausgeblendete Licht messen und daraus ein für den Fokussierungszustand charakteristisches Signal (Ik) erzeugen, dadurch gekennzeichnet, dass das optische System ein Beugungsgitter (5) oder ein äquivalentes Holographisches Optisches Element (HOE) umfasst.

8. Vorrichtung nach Anspruch 7, dadurch gekennzeichnet, dass das optische System (5, 6; HOE) den Leuchtfleck (LF) in Form eines je nach Fokussierungszustand des Lichtstrahls mehr oder weniger breiten Lichtstreifens (Sa, Sb, Sc) auf die Messblenden (Ma, Mb, Mc) abbildet.

9. Vorrichtung nach Anspruch 7, dadurch gekennzeichnet, dass die Messblenden (Ma, Mb, Mc, Md) im wesentlichen dreieck- oder rautenförmige Blendenöffnungen (13, 14) aufweisen.

10. Vorrichtung nach einem der Ansprüche 7 bis 9, gekennzeichnet durch Regelmittel (11, 12), welche die Fokussierung des Objekts (4) in Abhängigkeit des von den opto-elektrischen Mitteln (8a, 8b, 8c, 9) erzeugten charakteristischen Signals (Ik) automatische optimieren.

11. Vorrichtung nach einem der Ansprüche 7 bis 10, dadurch gekennzeichnet, dass die Messblenden durch die im wesentlichen in einer Ebene angeordneten Lichteintrittsflächen von Lichtleitelementen (20), insbesondere Lichtleitfasern gebildet sind.

12. Vorrichtung nach Anspruch 11, dadurch gekennzeichnet, dass drei Messblenden (Ma, Mb, Mc) vorhanden sind, wobei eine der Messblenden (Mc) vor, eine Messblende (Ma) im wesentlichen in und eine Messblende (Mb) nach der Sollposition (FP) des Bildes des Leuchtflecks (LF) bei optimal fokussiertem Lichtstrahl angeordnet ist.

## Claims

1. Process for the focusing of a beam of light, in particular a laser beam, on an object, wherein the luminous spot (LF) produces at least two images (Sa, Sb, Sc) on said object (4) by means of an optical system, a measuring diaphragm (Ma, Mb, Mc) is assigned to each of said images in different positions relative to the prevailing desired position (FP) of the image of the luminous spot with optimum focusing, and the intensities of the light not blocked out by the measuring diaphragms is measured and evaluated as a measure for the focusing and said focusing is adjusted in response to said measure, characterized in that at least two images (Sa, Sb, Sc) of the luminous spot are produced by means of a diffraction grating or an equivalent holographic optical element (HOE).

2. Process according to Claim 1, characterized in that the image of the luminous spot (LF) is reproduced by a cylindrical lens (6) or equivalent means (HOE) in the form of a luminous strip (Sa, Sb, Sc), the width of which varies as a function of the state of focusing, onto the measuring diaphragms (Ma, Mb, Mc).

3. Process according to Claim 1, characterized in that measuring diaphragms (Ma, Mb, Mc) having essentially V-shaped diaphragm apertures (13) are used, the width of which decreases at least on one side in the longitudinal direction of the luminous strip (Sa, Sb, Sc).

4. Process according to Claim 3, characterized in that measuring diaphragms (Md) having essentially rhomboidal diaphragm apertures (14) are used, the diagonal of which is located essentially in the center axis of the luminous strip (Sd).

5. Process according to Claim 3, characterized in that measuring diaphragms (Mf) having diaphragm apertures (16) bounded by non-linear edges are used.

6. Process according to Claim 1, characterized in that three images (Sa, Sb, Sc) of the luminous spot (LF) are produced, with one of the measuring diaphragms (Mc) being located in front of, one of the measuring diaphragms (Ma) essentially within and one of the measuring diaphragms (Mb) behind the desired position (FP) of the image (Sa) of the luminous spot (LF) when optimally focused.

7. Process for the focusing of a beam of light, in particular a laser beam, on an object exposed to it, with an optical system (5, 6; HOE) which produces at least two images (Sa, Sb, Sc) of the luminous spot (LF) on the object (4), with two measuring diaphragms (Ma, Mb, Mc) assigned to one image each, said diaphragms being arranged in different positions relative to the prevailing desired positions (FP) of the images (Sa, Sb, Sc) of the luminous spot (LF) when optimally focused, and with optoelectrical means (8a, 8b, 8c, 9) which measure the light not blocked out by the measuring diaphragms and from this produce a signal (Ik) characteristic of the state of focusing, characterized in that the optical system comprises a diffraction grating (5) or an equivalent holographic optical element (HOE).

8. Apparatus according to Claim 7, characterized in that the optical system (5, 6; HOE) reproduces the luminous spot (LF) in the form of a luminous strip (Sa, Sb, Sc), the width of which is a function of the state of focusing of the beam of light, on the measuring diaphragm (Ma, Mb, Mc).

9. Apparatus according to Claim 7, characterized in that the measuring diaphragms (Ma, Mb, Mc, Mb) have essentially triangular or rhomboidal diaphragm apertures (13, 14).

10. Apparatus according to one of Claims 7 to 9, characterized by adjusting means (11, 12) which automatically optimize the focusing of the object (4) as a function of the characteristic signal (Ik) produced by the opto-electrical means (8a, 8b, 8c, 9).

11. Apparatus according to one of Claims 7 to 10, characterized in that the measuring diaphragms are constituted by light inlet surfaces arranged essentially in one plane of light conduction elements (20), in particular optical fibers.

12. Apparatus according to Claim 11, characterized in that three measuring diaphragms (Ma, Mb, Mc) are present, with one of the measuring diaphragms (Mc) being located in front of, one measuring diaphragm (Ma) essentially within and one measuring diaphragm (Mb) behind the desired position (FP) of the image of the luminous spot (LF) when the beam of light is optimally focused.

## Revendications

1. Procédé pour mettre au point ou focaliser un rayon lumineux, en particulier un rayon laser, sur un objet, selon lequel on obtient sur l'objet (4), à l'aide d'un système optique, au moins deux images (Sa, Sb, Sc) d'un spot (LF), un diaphragme de mesure (Ma, Mb, Mc) de position différente relativement à chaque position de consigne (FP) de l'image du spot étant associé à chacune de ces images lors d'une focalisation optimale, et les intensités de la lumière non arrêtée par les diaphragmes de mesure étant mesurées et évaluées comme constituant la mesure de la focalisation, et la focalisation ou mise au point étant réglée en fonction de cela, procédé caractérisé en ce que les deux images au moins (Sa, Sb, Sc) du spot (LF) sont obtenues à l'aide d'un réseau de diffraction (5) ou d'un élément optique (HOE) holographique équivalent.

2. Procédé selon la revendication 1, caractérisé en ce que, par une lentille cylindrique (6) ou un moyen équivalent (HOE), l'image du spot (LF) est obtenue sous la forme d'une raie de lumière (Sa, Sb, Sc) plus ou moins large selon son état de focalisation, sur les diaphragmes de mesure (Ma, Mb, Mc).

3. Procédé selon la revendication 2, caractérisé en ce qu'on utilise des diaphragmes de mesure (Ma, Mb, Mc) ayant une ouverture (13) de diaphragme essentiellement en forme de V, dont la largeur diminue au moins vers un côté dans la direction longitudinale des raies lumineuses (Sa, Sb, Sc).

4. Procédé selon la revendication 3, caractérisé en ce qu'on utilise des diaphragmes de mesure (Md) ayant une ouverture (14) de diaphragme essentiellement en forme de losange dont une diagonale se situe essentiellement dans l'axe médian de la raie de lumière (Sd).

5. Procédé selon la revendication 3, caractérisé en ce qu'on utilise des diaphragmes de mesure (MF) ayant une ouverture (16) de diaphragme délimitée par des bords non linéaires.

6. Procédé selon la revendication 1, caractérisé en ce qu'on obtient trois images (Sa, Sb, Sc) du spot (LF), et en ce que l'un des diaphragmes de mesure (Mc) est, en cas de mise au point ou focalisation optimale, situé devant la position de consigne (FP) de l'image (Sa) du spot (LF), l'un des diaphragmes de mesure (Ma) est situé essentiellement dans cette position de consigne et l'un des diaphragmes de mesure (Mb) est situé derrière cette position de consigne.

7. Dispositif pour mettre au point ou focaliser un rayon de lumière, en particulier un rayon laser, sur un objet que ce rayon heurte, le dispositif comportant un système optique (5, 6; HOE), qui obtient sur l'objet (4) au moins deux images (Sa, Sb, Sc) d'un spot lumineux (LF), au moins deux diaphragmes de mesure (Ma, Mb, Mc) associés à chaque image et qui, en cas de mise au point ou focalisation optimale, sont situés en des positions différentes par rapport aux positions respectives de consigne (SP) des images (Sa, Sb, Sc) du spot lumineux (LF), et des moyens opto-électriques (8a, 8b, 8c, 9) qui mesurent la lumière non arrêtée par les diaphragmes de mesure et produisent à partir de cela un signal (Ik) caractéristique de l'état de focalisation, dispositif caractérisé en ce que le système optique comporte un réseau (5) de diffraction ou un élément optique (HOE) holographique équivalent.

8. Dispositif selon la revendication 7, caractérisé en ce que le système optique (5, 6; HOE) réalise sur les diaphragmes de mesure (Ma, Mb, Mc) l'image du spot lumineux (LF) en forme d'une raie lumineuse (Sa, Sb, Sc) plus ou moins large selon l'état de focalisation du rayon lumineux.

9. Dispositif selon la revendication 7, caractérisé en ce que les diaphragmes de mesure (Ma, Mb, Mc, Md) présentent des ouvertures (13, 14) essentiellement en forme de triangle ou de losange.

10. Dispositif selon l'une des revendications 7 à 9, caractérisé par des organes de réglage (11, 12) qui optimisent automatiquement la mise au point ou focalisation de l'objet (4) en fonction du signal (Ik) caractéristique émis par les organes opto-électriques (8a, 8b, 8c, 9).

11. Dispositif selon l'une des revendications 7 à 10, caractérisé en ce que les diaphragmes de mesure sont formés par les surfaces d'entrée de lumière, disposées essentiellement dans un plan, d'éléments (20) conducteurs de la lumière, en particulier des fibres conductrices de la lumière (fibres optiques).

12. Procédé selon la revendication 11, caractérisé en ce qu'il comporte trois diaphragmes de mesure (Ma, Mb, Mc), l'un des diaphragmes (Mc) étant, dans le cas d'un rayon lumineux focalisé de manière optimale, devant la position de consigne (FP) de l'image du spot lumineux (LF), un diaphragme de mesure (Ma) étant essentiellement dans cette position de consigne et un diaphragme de mesure (Mb) étant derrière cette position de consigne.

**Fig. 2**

**Fig. 3c**  **Fig. 3a**  **Fig. 3b**

**Fig. 3d**

Md

Sd

14

**Fig. 4a.**

Me

Se

**Fig. 4b**

Mf

Sf

16

**Fig. 4c**

V b

20

8d

**Fig. 5a**

20

**Fig. 5b**

V b

HOE

Mg  8g  Ig

LR

LR

Mh  8h  Ih

**Fig. 6**

**Fig. 7**

**Fig. 8**